# EUROPÄISCHE PATENTSCHRIFT

(11) **EP 3 555 487 B1**
(45) Veröffentlichungstag und Bekanntmachung des Hinweises auf die Patenterteilung: **08.02.2023**
(21) Anmeldenummer: 17808475.2
(22) Anmeldetag: 04.12.2017
(51) Int. Cl.: F16B 13/08, F16B 13/14, C23C 28/00, C25D 7/00, C25D 3/22

(54) **VERFAHREN ZUR BESCHICHTUNG EINES KALTUMGEFORMTEN MULTI-KONEN-VERANKERUNGSELEMENTS**
METHOD FOR COATING OF A COLD WORKED MULTI-CONE ANCHORING ELEMENT
PROCÉDÉ DE REVÊTEMENT D'UN ÉLÉMENT D'ANCRAGE MULTI-CÔNES DÉFORMÉ À FROID

(30) Priorität: 19.12.2016 EP 16204930
(43) Veröffentlichungstag der Anmeldung: 23.10.2019
(73) Patentinhaber: Hilti Aktiengesellschaft, 9494 Schaan (LI)
(72) Erfinder: ECKSTEIN, Andreas, 86899 Landsberg (DE); HUTTER, Remo, 9451 Kriessern (DE)
(74) Vertreter: Hilti Aktiengesellschaft Corporate Intellectual Property
(86) Internationale Anmeldenummer: PCT/EP2017/081387
(87) Internationale Veröffentlichungsnummer: WO 2018/114308

(56) Entgegenhaltungen:
- WO-A2-88/07142
- Anonymous: "Injection system Hilti HIT-HY 200-R with HIT-Z / HIT-Z-F / HIT-Z-R", European Technical Assessment - ETA-12/2008, 18. August 2016 (2016-08-18), Seiten 1-21, XP055375110, Gefunden im Internet: URL:https://www.hilti.ro/medias/sys_master /documents/h81/8868927143966/ETAG_001-05_O ption_1_ASSET_DOC_APPROVAL_0193.pdf [gefunden am 2017-05-22]
- Anonymous: "NON-CLEANING AND OPTIMIZED FOR CORROSIVE ENVIRONMENTS Hilti HIT-Z-F and HIT-HY 200 ultimate performance chemical anchor system", Brochure, 2016, Seiten 1-6, XP055375119, Gefunden im Internet: URL:https://www.hilti.dk/medias/sys_master /documents/heb/9215338184734/HIT-Z-F_Corro sion_Brochure_Brochure_ASSET_DOC_7134488.p df [gefunden am 2017-05-22]
- Anonym: "TECH SEAL SILVER WL 14", Datenblatt Kunz GmbH, 27. August 2005 (2005-08-27), Seiten 1-2, XP055375048, Gefunden im Internet: URL:http://www.galvanoteknik.org/dosyalar/ haytek/eng/TECHSEAL%20SILVER%20WL%2014.pdf [gefunden am 2017-05-22]
- Anonym: "Zinklamellen-Technologie für höchste Korrosionsbeständigkeit in Silber", Broschüre - Atotech Deutschland GmbH, Mai 2008 (2008-05), Seiten 1-4, XP055375159, Gefunden im Internet: URL:http://www.beteo.de/pdf/PI_ZincFlake_S ilver_D.pdf [gefunden am 2017-05-23]

## Beschreibung

### GEBIET DER ERFINDUNG

Die Erfindung betrifft ein Verfahren zur Beschichtung eines kaltumgeformten Multi-Konen-Verankerungselements für die chemische Befestigungstechnik. Insbesondere betrifft die Erfindung ein Verfahren zur Beschichtung eines kaltumgeformten Multi-Konen-Verankerungselements, welches sich besser vom Verbundmörtel ablöst und sich gleichzeitig durch verbesserte Gleiteigenschaften auszeichnet.

### HINTERGRUND DER ERFINDUNG

Verankerungselemente mit unterschiedlicher Beschichtung werden heutzutage in der chemischen Befestigungstechnik vielfach eingesetzt. Ein optimaler Korrosionsschutz der Verankerungselemente ist hierfür eine unerlässliche Voraussetzung.

Verankerungselemente aus C-Stahl für mittlere und schwere Befestigungen erhalten in der Regel für Innenanwendungen einen galvanisch verzinkten Überzug von 5 µm zur Vermeidung von Flugrost bei Transport und Anwendung. Für Außenanwendungen bieten sich rostfreie Stähle verschiedener Festigkeitsklassen an, die jedoch oft bezüglich Korrosion überdimensioniert sind und darüber hinaus preislich deutlich über den C-Stählen liegen.

Ein erhöhter Korrosionsschutz lässt sich auch mit einer Feuerverzinkung erreichen, die beispielsweise im Zinkbad in der Regel in einer Schichtdicke von mindestens 50 µm resultiert. Durch die erhöhte Verzinkungsdicke ist damit auch ein intensiverer und längerer Korrosionsschutz gegeben.

Eine Alternative zur Erhöhung der Korrosionseigenschaften von Stählen ist eine sogenannte Schutzbeschichtung, auch Topcoat genannt, die über die galvanische Verzinkung aufgetragen wird. Im Gegensatz zum Feuerverzinken verhindert die Schutzbeschichtung, dass die galvanische Zinkschicht durch Umwelteinflüsse angegriffen wird und erzielt damit erhöhte Korrosionsbeständigkeit.

In der Massenproduktion von Verankerungselementen wird die konventionelle, gespante Herstellung der Dübel teilweise durch eine Kaltumformung ersetzt, da diese nicht nur die Herstellkosten senkt, sondern auch den Stahl verfestigt und eine glatte Oberfläche der Funktionsflächen des Verankerungselements erzeugen kann.

In der chemischen Befestigungstechnik werden zur Erzielung höherer Lasten im gerissenen Beton und zur Vermeidung der Bohrlochreinigung, Multi-Konen-Ankerstangen eingesetzt. Durch die Konen wird eine Spreizwirkung erzielt, die ein Aufbrechen der Mörtelschale zwischen Bohrloch und Verankerungselement ermöglicht und damit zum einen die Haltekraft des Verbundmörtels an der Bohrlochwandung erhöht, insbesondere im ungereinigten Bohrloch, und zum anderen eine Nachspreizung des Verbundsystems im Riss ermöglicht, was zu einer signifikanten Lastenerhöhung führt. Voraussetzung für das Nachspreizen ist eine initiale Mindesthaltekraft des Verbundmörtels im Bohrloch und ein Lösen und Gleiten zwischen Verbundmörtel und Multi-Konen-Verankerungselement während des Auszuges im Riss. Normalerweise werden die guten Löse- und Gleiteigenschaften durch eine Beschichtung des Multi-Konen-Verankerungselements erreicht.

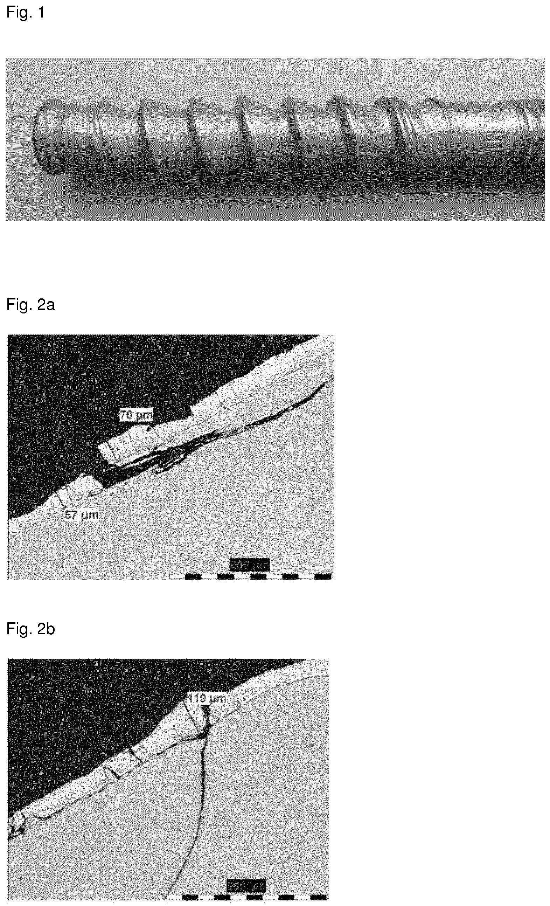

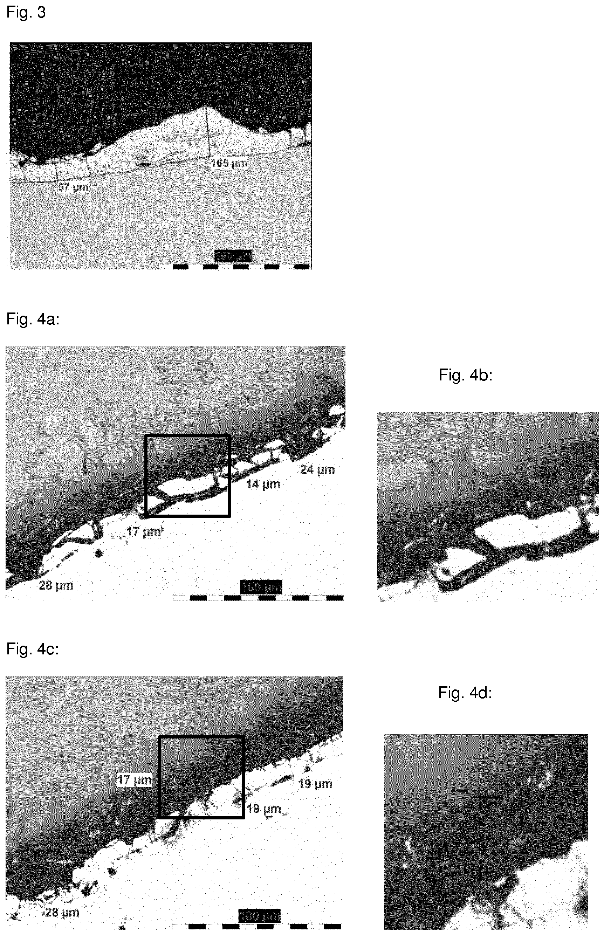

Bei gespanter Herstellung der Multi-Konen-Verankerungselemente kann das Feuerverzinken zur Erhöhung der Korrosionseigenschaften problemlos eingesetzt werden. Wird hingegen jedoch eine Kaltumformung bei Multi-Konen-Verankerungselementen eingesetzt, kann es bei der Feuerverzinkung zu Schuppenbildung an der Oberfläche und zu großen Oberflächenrauigkeiten kommen (Fig. 1). Grund dafür sind mikroskopische Oberflächenschädigungen des Multi-Konen-Verankerungselementes durch den Prozess des Kaltumformens, die bei der Feuerverzinkung von der erhitzten Zinkschmelze unterwandert werden, sich Aufstellen und beim Abkühlen dann eine punktuelle starke Oberfächenrauigkeit hinterlassen (Fig. 2a und 2b). Weiterhin können auch oberflächennahe, mikroskopisch kleine Stahlpartikel abgelöst werden, die sich dann in der Zinkschicht einlagern (Fig. 3). Durch diese raue Oberfläche kann sich das Multi-Konen-Verankerungselement schwerer von dem Verbundmörtel ablösen und es entsteht ein deutlich erhöhter Reibwiderstand beim Nachspreizen im Rißfall, was schließlich zur Fehlfunktion des Verbundsystems und damit zu deutlichen Lastreduktionen führen kann.

Eine erhöhte Korrosionsbeständigkeit des Multi-Konen-Verankerungselements kann durch Aufbringung einer Schutzbeschichtung erfolgen und die vorausgesetzten guten Löse- und Gleiteigenschaften durch eine Deckbeschichtung mit guten Trenn- und Gleiteigenschaften erzielt werden. Wird jedoch die Deckbeschichtung mit guten Trenn- und Gleiteigenschaften unmittelbar auf die Schutzbeschichtung aufgebracht, wird die Deckbeschichtung vollständig durch die Schutzbeschichtung aufgesaugt, so dass der Verbundmörtel sich nicht vom Multi-Konen-Verankerungselement trennen kann sowie dass das Multi-Konen-Verankerungselement nicht mehr gleiten kann (Fig. 4a bis 4d).

Aufgabe der vorliegenden Erfindung ist es daher ein Verfahren bereitzustellen, dass zur Beschichtung eines kaltumgeformten Multi-Konen-Verankerungselements dient, welches sich besser vom Verbundmörtel ablöst und sich gleichzeitig durch verbesserte Gleiteigenschaften auszeichnet sowie die Nachteile des Standes der Technik überkommt, insbesondere sich durch einen verbesserten erhöhten Korrosionsschutz auszeichnet.

### ZUSAMMENFASSUNG DER ERFINDUNG

Die vorliegende Erfindung betrifft ein Verfahren zur Beschichtung eines kaltumgeformten Multi-Konen-Verankerungselements für die chemische Befestigungstechnik umfassend die folgenden Schritte: Bereitstellen eines kaltumgeformten Multi-Konen-Verankerungselements, galvanisches Verzinken des kaltumgeformten Multi-Konen-Verankerungselements, Aufbringen einer Schutzbeschichtung, Aufbringen einer Grundierung, und Aufbringen einer Deckbeschichtung.

Die vorliegende Erfindung betrifft weiterhin ein Multi-Konen-Verankerungselement, das nach diesem Verfahren beschichtet ist, für die chemische Befestigungstechnik.

### KURZE BESCHREIBUNG DER FIGUREN

Fig. 1: Feuerverzinktes kaltumgeformtes Multi-Konen-Verankerungselement mit Schuppen und großen Oberflächenrauigkeiten;
Fig. 2a und Fig. 2b: Mikroskopaufnahmen der Oberfläche eines feuerverzinkten kaltumgeformten Multi-Konen-Verankerungselements mit punktueller starker Oberfächenrauigkeit;
Fig. 3 Mikroskopaufnahme der Oberfläche eines feuerverzinkten kaltumgeformten Multi-Konen-Verankerungselements mit Stahlrückständen;
Fig. 4a bis Fig. 4d: Mikroskopaufnahmen der Oberfläche eines feuerverzinkten kaltumgeformten Multi-Konen-Verankerungselements, wobei die Deckbeschichtung unmittelbar auf die Schutzbeschichtung, ohne Grundierung, aufgebracht ist. Fig. 4b und Fig. 4d zeigen den jeweilig markierten Ausschnitt von Fig. 4a bzw. Fig. 4c, worin nur die Zinkschicht zu erkennen ist;
Fig. 5a bis Fig. 5d: Mikroskopaufnahmen der Oberfläche eines feuerverzinkten kaltumgeformten Multi-Konen-Verankerungselements, wobei die Deckbeschichtung unmittelbar auf die Grundierung aufgebracht ist. Fig. 5b und Fig. 5d zeigen den jeweilig markierten Ausschnitt von Fig. 5a bzw. Fig. 5c, worin die Zinkschicht und die Wachsschicht zu erkennen ist; und
Fig. 6: Kaltumgeformtes Multi-Konen-Verankerungselement beschichtet mit dem Verfahren der vorliegenden Erfindung.

### AUSFÜHRLICHE BESCHREIBUNG DER ERFINDUNG

Die folgenden Begriffe werden im Rahmen der vorliegenden Erfindung verwendet:
Im Rahmen der vorliegenden Erfindung verwendet, schließen die Singularformen "ein", "eine" und "einer" auch die entsprechenden Pluralformen ein, sofern der Zusammenhang nicht eindeutig auf etwas Anderes schließen lässt. Somit soll zum Beispiel der Begriff "ein" "ein oder mehrere" oder "zumindest ein" bedeuten, sofern nicht anders angegeben.

Der Begriff "Schutzbeschichtung" im Rahmen der vorliegenden Erfindung bezieht sich auf einen Topcoat bzw. eine Topcoat-Beschichtung, die die darunterliegende Schicht versiegelt.

Der Begriff "Grundierung" im Rahmen der vorliegenden Erfindung bezieht sich auf einen Primer bzw. eine Primer-Beschichtung, die verhindert, dass die Deckbeschichtung von der Schutzbeschichtung aufgesaugt wird.

Der Begriff "Deckbeschichtung" im Rahmen der vorliegenden Erfindung umfasst eine Beschichtung, die sich durch gute Trenn- und Gleiteigenschaften auszeichnet.

In einem Aspekt betrifft die vorliegende Erfindung ein Verfahren zur Beschichtung eines kaltumgeformten Multi-Konen-Verankerungselements für die chemische Befestigungstechnik.

In einem weiteren Aspekt betrifft die vorliegende Erfindung ein Multi-Konen-Verankerungselement, das nach diesem Verfahren beschichtet ist, für die chemische Befestigungstechnik.

Es wurde herausgefunden, dass das erfindungsgemäße Verfahren sich besonders dazu eignet, in einfacher, kontinuierlicher, ökonomischer und kostengünstiger Weise ein kaltumgeformtes Multi-Konen-Verankerungselement zu beschichten, das sich besser vom Verbundmörtel ablöst und sich gleichzeitig durch verbesserte Gleiteigenschaften auszeichnet.

Daher ist es ein Ziel der vorliegenden Erfindung, das Verfahren zur Beschichtung eines kaltumgeformten Multi-Konen-Verankerungselements für die chemische Befestigungstechnik zu beschreiben. Ferner ist es Ziel der vorliegenden Erfindung ein Multi-Konen-Verankerungselement zu beschreiben, das nach diesem Verfahren beschichtet ist, für die chemische Befestigungstechnik.

Das Verfahren zur Beschichtung eines kaltumgeformten Multi-Konen-Verankerungselements für die chemische Befestigungstechnik der vorliegenden Erfindung umfasst die folgenden Schritte: i) Bereitstellen eines kaltumgeformten Multi-Konen-Verankerungselements, ii) Galvanisches Verzinken des kaltumgeformten Multi-Konen-Verankerungselements, iii) Aufbringen einer Schutzbeschichtung, iv) Aufbringen einer Grundierung, und v) Aufbringen einer Deckbeschichtung.

In einem ersten Schritt wird ein kaltumgeformtes Multi-Konen-Verankerungselement bereitgestellt. Vorzugsweise ist das kaltumgeformte Multi-Konen-Verankerungselement aus kohlenstoffhaltigem Stahl (C-Stahl) mit erhöhter Korrosionsbeständigkeit.

In einem nächsten Schritt erfolgt das galvanische Verzinken des kaltumgeformten Multi-Konen-Verankerungselements. Die Galvanische Verzinkung (ZnNi-Legierungsüberzug) erfolgt als Schüttgut in einem fest definierten Ablauf nach DIN 50979 in der aktuell gültigen Fassung. Die Beschichtung erfolgt vorzugsweise als Massenschüttbeschichtung und umfasst Einfüllen der Multi-Konen-Ankerstangen in eine Kunststoff-Trommel und Durchlauf durch die Beschichtungsanlage mit folgenden Schritten: Vorbehandlung, ZnNi-Beschichtung mittels Elektrochemie, Passivierung durch chemische Nachbehandlung, Trocknen, und Spezifikation: Fe//ZnNi8//An//T0, passiviert. Fe bezieht sich auf das Untergrundmaterial, im vorliegenden Fall Stahl; der ZnNi-Legierungsüberzug hat einen Massenanteil von vorzugsweise 12% bis 16% Nickel und 8 bezieht sich auf die kleinste örtliche Schichtdicke von 8 µm an der definierten Messstelle; An steht für transparent passiviert - farblos bis farbig irisierend; und T0 bedeutet ohne Versiegelung.

Das galvanische Verzinken kann auch im Hängeverfahren oder auch mittels Spritzverfahren erfolgen. Vorzugsweise erfolgt das galvanische Verzinken durch Tauchen der Multi-Konen-Verankerungselemente. Das galvanische Verzinken im Verfahren der vorliegenden Erfindung erfolgt bei einer Stromdichte im Bereich von 0,5 - 1,0 A/dm², vorzugsweise bei einer Stromdichte von 0,8 A/dm².

Die Prüfung des galvanisch verzinkten kaltumgeformten Multi-Konen-Verankerungselements erfolgt nach DIN EN ISO 3497 in der aktuell gültigen Fassung, z.B. mittels Röntgenfluoreszenzmethode. Die Prüfung erfolgt an 15 Stück zufällig entnommenen Teilen und muss den obigen Spezifikationen entsprechen.

In einem nächsten Schritt erfolgt das Aufbringen einer Schutzbeschichtung, auch Topcoat-Beschichtung genannt. Diese Schutzbeschichtung im Verfahren der vorliegenden Erfindung ist vorzugsweise eine organische Schutzbeschichtung, insbesondere eine organische Schutzbeschichtung mit einer minimalen Einbrenntemperatur von 170°C und einer Einbrennzeit von etwa 30 min. Eine solche organische Schutzbeschichtung ist zum Beispiel die "Techseal^{®} Silver WL4"-Beschichtung von Atotech Deutschland GmbH. Die Beschichtung wird bei Raumtemperatur aufgebracht, vorzugsweise durch Eintauchen eines mit Verankerungselementen gefüllten Korbs in einen mit flüssiger Beschichtung gefüllten Behälter. Insbesondere erfolgt das Aufbringen der Schutzbeschichtung durch Tauchen der Multi-Konen-Ankerstangen. Danach wird der Korb aus dem Behälter genommen und geschleudert, um eine homogene Verteilung der Schutzbeschichtung auf den einzelnen Verankerungselementen zu erzielen. Insbesondere erfolgt das Schleudern mit einer Drehzahl im Bereich von 100 bis 400 upm, vorzugsweise von 150 bis 300 upm, und einer Drehdauer im Bereich von 10 bis 30 s, vorzugsweise von 15 bis 25 s. Vorzugsweise wird Im Anschluss wird die Beschichtung 30 min bei minimal 170°C eingebrannt. Dieser Beschichtungsprozess wird zwei- oder mehrmalig durchgeführt.

Die Schichtdicke der Schutzbeschichtung wird durch eine mikroskopische Messung nach DIN EN ISO 1463 in der aktuell gültigen Fassung ermittelt. Die Messung erfolgt im Rahmen der Erstmusterprüfung. Die Prüfung erfolgt an 3 Stück zufällig entnommenen Teilen nach den zwei Beschichtungsvorgängen. Die Schichtdicke wird mittels eines Querschliffs durch den Schaft bestimmt. Es wird jeweils an 3 Messstellen (4, 8 und 12 Uhr) die Schichtdicke gemessen. Der Durchschnittswert dieser Messungen ergibt die mittlere Schichtdicke für die Schutzbeschichtung. Durch Niveauüberwachung wird sichergestellt, dass alle Einzelteile beschichtet werden. Vorzugsweise muss die Qualität der Lösung bezüglich möglicher Verunreinigungen überwacht werden. Gegebenenfalls muss die Lösung filtriert oder ausgetauscht werden, da sie mit der Zeit durch Partikel, wie beispielsweise Zink, Staub oder Abrieb, verunreinigt werden kann. Dies ist notwendig, damit die Güte der Beschichtung konstant sichergestellt ist.

In einem nächsten Schritt erfolgt das Aufbringen einer Grundierung, auch Primer genannt. Diese Grundierung im Verfahren der vorliegenden Erfindung ist vorzugsweise ein organisches Bindesystem auf Acrylatbasis, insbesondere ein organisches Bindesystem auf Acrylatbasis mit einer maximalen Einbrenntemperatur von 180°C und einer Einbrennzeit von etwa 30 min. Ein solches organisches Bindesystem ist zum Beispiel "Primer W11 light" der Verzinkerei Kriessern AG. Die Beschichtung wird bei Raumtemperatur aufgetragen durch Eintauchen eines mit Multi-Konen-Verankerungselementen gefüllten Korbs in einen mit flüssigem Primer gefüllten Behälter. Vorzugsweise erfolgt das Aufbringen der Grundierung durch Tauchen der Multi-Konen-Verankerungselemente. Danach wird der Korb aus dem Behälter genommen und geschleudert, um eine gleichmäßige Verteilung des Primer auf den einzelnen Verankerungselementen sicherzustellen. Insbesondere erfolgt das Schleudern mit einer Drehzahl im Bereich von 100 bis 400 upm, vorzugsweise von 150 bis 300 upm, und einer Drehdauer im Bereich von 1 bis 5 min, vorzugsweise von 2 bis 3 min. Im Anschluss wird die Beschichtung 30 min bei maximal 180°C eingebrannt.

Durch Niveauüberwachung wird sichergestellt, dass alle Einzelteile beschichtet werden. Vorzugsweise muss die Qualität der Lösung bezüglich möglicher Verunreinigungen überwacht werden. Gegebenenfalls muss die Lösung filtriert oder ausgetauscht werden, da sie mit der Zeit durch Partikel, wie beispielsweise Zink, Staub oder Abrieb, verunreinigt werden kann. Dies ist notwendig, damit die Güte der Beschichtung konstant sichergestellt ist.

In einem nächsten Schritt erfolgt das Aufbringen einer Deckbeschichtung. Diese Deckbeschichtung im Verfahren der vorliegenden Erfindung ist vorzugsweise eine Wachsbeschichtung, insbesondere eine Licowax^{®}- oder Vestowax^{®}-Beschichtung. In einer bevorzugten Ausführungsform ist die Wachsbeschichtung eine Licowax^{®}-Beschichtung. Diese Licowax^{®}-Beschichtung umfasst mindestens 2% Gewichtsprozent Licowax^{®} PED 522 (Clariant). Gegebenenfalls kann ein wirksamer Anteil an dauerhaft fluoreszierendem Zusätzen enthalten sein, wie beispielsweise ein Fluoreszenzpulver (Ciba, UVITEX OB).

Die Aufbringung der Deckbeschichtung erfolgt im Tauchverfahren im Schüttgut. Eine gleichmäßige Verteilung der Deckbeschichtung auf den Multi-Konen-Verankerungselementen wird durch einen Schleudervorgang vor dem Abtrocknen sichergestellt. Alle Multi-Konen-Verankerungselementen müssen vollständig und gleichmäßig mit der Deckbeschichtung benetzt sein. Dieser Beschichtungsprozess wird zweimal durchgeführt. Vorzugsweise erfolgt das Aufbringen der Deckbeschichtung durch Tauchen der Multi-Konen-Verankerungselemente. Danach wird der Korb aus dem Behälter genommen und geschleudert, um eine gleichmäßige Verteilung der Deckbeschichtung auf den einzelnen Verankerungselementen sicherzustellen. Insbesondere erfolgt das Schleudern mit einer Drehzahl im Bereich von 100 bis 400 upm, vorzugsweise von 150 bis 300 upm, und einer Drehdauer im Bereich von 1 bis 5 min, vorzugsweise von 2 bis 3 min. Vorzugsweise muss die Qualität der Lösung bezüglich möglicher Verunreinigungen überwacht werden. Gegebenenfalls muss die Lösung filtriert oder ausgetauscht werden, da sie mit der Zeit durch Partikel, wie beispielsweise Zink, Staub oder Abrieb, verunreinigt werden kann. Dies ist notwendig, damit die Güte der Beschichtung konstant sichergestellt ist.

Die Aufbringung der Deckbeschichtung kann auch im Hängeverfahren oder auch mittels Spritzverfahren erfolgen.

Die Produkte werden unter einer geeigneten Lichtquelle (UV-/Schwarzlicht) auf das Vorhandensein der Beschichtung geprüft. Die Prüfung erfolgt an 5 Stück zufällig entnommenen Teilen und ist dem Fachmann bekannt.

Die Endprüfung der beschichteten Multi-Konen-Verankerungselemente erfolgt durch die Ermittlung des "H-Merkmals". Das H-Merkmal ist ein besonderes Maß bzw. ein besonderer Hinweis auf einer Zeichnung mit einer sehr großen Bedeutung für die Gesamtfunktion des Produktes. In der Regel unterliegt dieses H-Merkmal einer besonderen Qualitätssicherung. Die Sicherstellung der H-Merkmal-Anforderungen gelten mit der Einhaltung der Mindestschichtdicke für die erste Schicht (ZnNi) und der Prozessüberwachung für die zweite, dritte und vierte Schicht als erfüllt.

Die Korrosionsprüfung erfolgt durch folgende Korrosionstests am Fertigprodukt im Rahmen der Erstmusterprüfung: ISO 20340 - zyklischer Korrosionstest mit UV, Tiefkühlung und Salzsprühtest - Test auf Frühausfälle - Dauer 5 Wochen (5 Zyklen); ISO 16701 - zyklischer Korrosionstest (Feuchte und Temperaturzyklen, Chloride) - Langzeitverhalten - Dauer 12 Wochen. Die Korrosionsprüfung stellt die Qualität der Multi-Konen-Verankerungselemente sicher.

### AUSFÜHRUNGSBEISPIEL

Nach dem Verfahren der vorliegenden Erfindung beschichtete kaltumgeformte Multi-Konen-Verankerungselemente, d.h. konische Ankerstangen mit einem M12-Anschluss-Gewinde, 196 mm (HIT-Z, Fa. Hilti), sowie nach dem Stand der Technik beschichtete Multi-Konen-Verankerungselemente als Vergleich, wurden mit einem chemischen Verbundmörtel (HIT-HY 200-A, Hybrid-Hochleistungs-Injektionsmörtel der Fa. Hilti) in einem feuchten Bohrloch in C20/25 mit einer Tiefe von 60 mm gesetzt und bei Raumtemperatur 24 h ausgehärtet. Nach dem Stand der Technik beschichtete Multi-Konen-Verankerungselemente wurden Lastwerte von 17 kN im statischen 0,3 mm Parallelriß erzielt. Die raue Oberfläche der nach dem Stand der Technik beschichteten Verankerungselemente verursacht eine schwerere Ablösung von dem Verbundmörtel und einen deutlich erhöhten Reibwiderstand beim Nachspreizen im Rißfall, was schließlich zur Fehlfunktion des Dübelsystems und damit zu deutlichen Lastreduktionen führt. Im Vergleich dazu wurden unter gleichen Bedingungen mit Ankerstangen, die nach dem Verfahren der vorliegenden Erfindung beschichtet wurden, Lastwerte von 27 kN erreicht, was auf gute Trenn- und Gleiteigenschaften zurückzuführen ist.

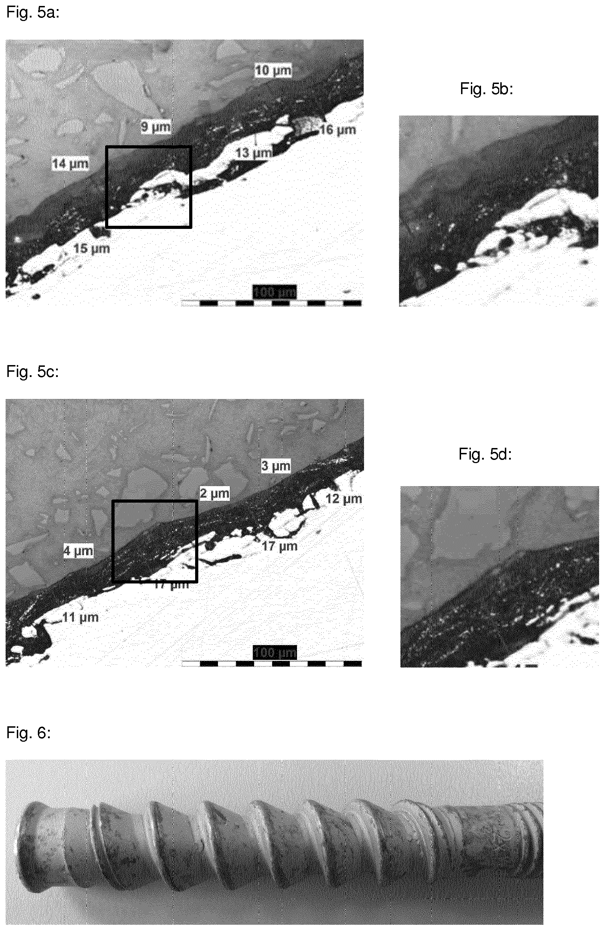

Mikroskopische Aufnahmen zeigen, dass das Verfahren der vorliegenden Erfindung ein beschichtetes Multi-Konen-Verankerungselement hervorbringt, mit einer Oberfläche ohne Oberfächenrauigkeit und ohne Einlagerung von Stahlpartikeln in der Zinkschicht (Fig. 5a bis 6). Weiterhin verhindert die Grundierung, dass die Deckbeschichtung von der Schutzschicht aufgesaugt wird und so kann die Deckbeschichtung ihre guten Trenn- und Gleiteigenschaften ausspielen. Weiterhin zeichnet sich das Multi-Konen-Verankerungselement durch einen verbesserten erhöhten Korrosionsschutz aus.

Die mikroskopischen Aufnahmen werden durch Schliffbilder in kalteingebettetem Medium erhalten. Dazu werden die Proben auf der Präzisionstrennmaschine Brilliant 221 von ATM getrennt, danach vorgeschliffen und eingebettet mit dem durchsichtigen Kalteinbettmittel Technovit 4006SE der Fa. Kulzer. Die metallografische Untersuchung und Fotoerstellung erfolgt mit dem Metallmikroskop DM 4000M der Fa. Leica mit den Vergrößerungen 25:1 und 500:1 (Fig. 2a bis 5b).

## Patentansprüche

1. Verfahren zur Beschichtung eines kaltumgeformten Multi-Konen-Verankerungselements für die chemische Befestigungstechnik umfassend die folgenden Schritte:
i) Bereitstellen eines kaltumgeformten Multi-Konen-Verankerungselements,
ii) Galvanisches Verzinken des kaltumgeformten Multi-Konen-Verankerungselements,
iii) Aufbringen einer Schutzbeschichtung,
iv) Aufbringen einer Grundierung, und
v) Aufbringen einer Deckbeschichtung.

2. Verfahren nach Anspruch 1, worin Schritt ii) Tauchen der Multi-Konen-Verankerungselemente bei einer Stromdichte im Bereich von 0,5 - 1,0 A/dm², vorzugsweise bei einer Stromdichte von 0,8 A/dm², umfasst.

3. Verfahren nach Anspruch 1 oder 2, worin Schritt iii) fernen Einbrennen der Schutzbeschichtung umfasst.

4. Verfahren nach Anspruch 3, worin Einbrennen der Schutzbeschichtung für 30 min bei minimal 170°C erfolgt.

5. Verfahren nach einem der vorgehenden Ansprüche, worin Schritt iv) ferner Einbrennen der Grundierung umfasst.

6. Verfahren nach Anspruch 5, worin Einbrennen der Grundierung für 30 min bei maximal 180°C erfolgt.

7. Verfahren nach einem der vorgehenden Ansprüche, worin die Schutzbeschichtung eine organische Schutzschicht mit einer minimalen Einbrenntemperatur von 170°C und einer Einbrennzeit von etwa 30 min ist.

8. Verfahren nach einem der vorgehenden Ansprüche, worin die Grundierung ein organisches Bindesystem auf Acrylatbasis, insbesondere ein organisches Bindesystem auf Acrylatbasis mit einer maximalen Einbrenntemperatur von 180°C und einer Einbrennzeit von etwa 30 min ist.

9. Verfahren nach einem der vorgehenden Ansprüche, worin die Deckbeschichtung eine Wachsbeschichtung ist.

10. Verfahren nach Anspruch 9, worin die Wachsbeschichtung eine Licowax^{®}- oder Vestowax^{®}-Beschichtung, vorzugsweise eine Licowax^{®}-Beschichtung, ist.

11. Verfahren nach einem der vorgehenden Ansprüche, worin das Multi-Konen-Verankerungselement aus kohlenstoffhaltigem Stahl mit erhöhter Korrosionsbeständigkeit besteht.

12. Multi-Konen-Verankerungselement für die chemische Befestigungstechnik, beschichtet mit dem Verfahren nach einem der Ansprüche 1 bis 11.

## Claims

1. Method for coating a cold-formed multi-cone anchoring element for chemical fastening technology, comprising the following steps:
i) providing a cold-formed multi-cone anchoring element,
ii) galvanizing the cold-formed multi-cone anchoring element,
iii) applying a protective coating,
iv) applying a primer, and
v) applying a top coating.

2. Method according to claim 1, in which step ii) comprises immersing the multi-cone anchoring elements at a current density in the range of 0.5-1.0 A/dm², preferably at a current density of 0.8 A/dm².

3. Method according to claim 1 or 2, in which step iii) comprises further baking the protective coating.

4. Method according to claim 3, in which the protective coating is baked for 30 minutes at a minimum of 170°C.

5. Method according to any of the preceding claims, in which step iv) comprises further baking the primer.

6. Method according to claim 5, in which the primer is baked for 30 minutes at a maximum of 180°C.

7. Method according to any of the preceding claims, wherein the protective coating is an organic protective layer having a minimum baking temperature of 170°C and a baking time of about 30 minutes.

8. Method according to any of the preceding claims, in which the primer is an organic binder system based on acrylate, in particular an organic binder system based on acrylate having a maximum baking temperature of 180°C and a baking time of about 30 minutes.

9. Method according to any of the preceding claims, in which the top coating is a wax coating.

10. Method according to claim 9, in which the wax coating is a Licowax^{®} or Vestowax^{®} coating, preferably a Licowax^{®} coating.

11. Method according to any of the preceding claims, in which the multi-cone anchoring element is made of carbon-containing steel with increased corrosion resistance.

12. Multi-cone anchoring element for chemical fastening technology, coated using the method according to any of claims 1 to 11.

## Revendications

1. Procédé de revêtement d'un élément d'ancrage à plusieurs cônes formé à froid pour la technique de scellement chimique, comprenant les étapes suivantes :
i) la fourniture d'un élément d'ancrage à plusieurs cônes formé à froid,
ii) le zingage galvanique de l'élément d'ancrage à plusieurs cônes formé à froid,
iii) l'application d'un revêtement de protection,
iv) l'application d'un apprêt, et
v) l'application d'un revêtement de finition.

2. Procédé selon la revendication 1, dans lequel l'étape ii) comprend le trempage de l'élément d'ancrage à plusieurs cônes à une densité de courant dans la plage comprise entre 0,5 et 1,0 A/dm², de préférence à une densité de courant de 0,8 A/dm².

3. Procédé selon la revendication 1 ou 2, dans lequel l'étape iii) comprend la cuisson supplémentaire du revêtement de protection.

4. Procédé selon la revendication 3, dans lequel la cuisson du revêtement de protection s'effectue pendant 30 minutes à au moins 170 °C.

5. Procédé selon l'une quelconque des revendications précédentes, dans lequel l'étape iv) comprend en outre la cuisson de l'apprêt.

6. Procédé selon la revendication 5, dans lequel la cuisson de l'apprêt s'effectue pendant 30 minutes à au plus 180 °C.

7. Procédé selon l'une quelconque des revendications précédentes, dans lequel le revêtement de protection est une couche de protection organique présentant une température de cuisson minimale de 170 °C et un temps de cuisson d'environ 30 minutes.

8. Procédé selon l'une quelconque des revendications précédentes, dans lequel l'apprêt est un système de liant organique à base d'acrylate, en particulier un système de liant organique à base d'acrylate présentant une température de cuisson maximale de 180 °C et un temps de cuisson d'environ 30 minutes.

9. Procédé selon l'une quelconque des revendications précédentes, dans lequel le revêtement de finition est un revêtement de cire.

10. Procédé selon la revendication 9, dans lequel le revêtement de cire est un revêtement Licowax^{®} ou Vestowax^{®}, de préférence un revêtement Licowax^{®}.

11. Procédé selon l'une quelconque des revendications précédentes, dans lequel l'élément d'ancrage à plusieurs cônes est réalisé en acier contenant du carbone présentant une résistance accrue à la corrosion.

12. Élément d'ancrage à plusieurs cônes pour la technique de scellement chimique, revêtu selon le procédé selon l'une quelconque des revendications 1 à 11.
